# EUROPÄISCHE PATENTSCHRIFT

(11) **EP 2 917 384 B1**
(45) Veröffentlichungstag und Bekanntmachung des Hinweises auf die Patenterteilung: **19.12.2018**
(21) Anmeldenummer: 14701481.5
(22) Anmeldetag: 08.01.2014
(51) Int. Cl.: C23C 22/83, C23C 22/36, C23C 22/34, B05D 7/16, B21D 22/20, B21D 51/26, C09D 5/08

(54) **HERSTELLUNGSVERFAHREN FÜR ALUMINIUMDOSEN UND DIE VERWENDETE VORBEHANDLUNGSZUSAMMENSETZUNG**
PROCESS FOR FABRICATING ALUMINIUM CANS AND THE PRETREATMENT COMPOSITION USED THEREOF
PROCÉDÉ DE FABRICATION DES BOÎTES EN ALUMINIUM ET LA COMPOSITION DE PRÉTRAITMENT UTILISÉE

(30) Priorität: 08.11.2012 DE 102012220385
(43) Veröffentlichungstag der Anmeldung: 16.09.2015
(73) Patentinhaber: Henkel AG & Co. KGaA, 40589 Düsseldorf (DE)
(72) Erfinder: RIESOP, Jörg, 50171 Kerpen (DE)
(86) Internationale Anmeldenummer: PCT/EP2014/050191
(87) Internationale Veröffentlichungsnummer: WO 2014/072538

(56) Entgegenhaltungen:
- EP-A1- 0 401 565
- EP-A1- 2 159 045
- EP-A2- 1 241 236
- WO-A1-2007/113141
- WO-A2-02/24344
- DE-A1-102005 027 633
- DE-U1-202006 005 671
- US-A- 2 327 885
- US-A- 4 944 889
- US-A- 5 378 379

## Beschreibung

Die vorliegende Erfindung betrifft ein Herstellungsverfahren für Dosenzylinder gemäß Anspruch 1 und eine saure wässrige Zusammensetzung gemäß Anspruch 10 zur Vorbehandlung von Dosen in deren Verlauf eine anorganisch-organische Konversionsschicht ausgebildet wird, die als solche einen hervorragenden Haftgrund für das Gleitverhalten der ausgeformten Dosenbleche verbessernden Wachse und die nachfolgende Lackierung bietet. Die Erfindung umfasst dabei ein nasschemisches Vorbehandlungsverfahren, bei dem ein Dosenzylinder zunächst mit einer sauren wässrigen Zusammensetzung, die wasserlösliche anorganische Verbindungen der Elemente Zr, Ti, Si, Hf oder Ce und wasserlösliche Polymere mit Hydroxyl-Gruppen enthält, und anschließend mit einer wässrigen Dispersion eines Wachses in Kontakt gebracht wird. Auf diese Weise werden den Dosenzylindern die für die weiteren Verfahrensschritte der Dosenherstellung nötigen Gleit- und Umformeigenschaften verliehen und zusätzlich ein hervorragender Lackhaftgrund bereitgestellt. Es können sowohl die Außen- als auch Innenflächen metallischer Dosenzylinders im erfindungsgemäßen Verfahren vorbehandelt werden.

Dosen aus verzinntem Stahl (Weißblech) sowie aus Aluminium (bzw. aus Aluminiumlegierungen, die im Folgenden der Einfachheit wegen unter "Aluminium" zusammengefasst werden) und aus Stahl sind zum Aufbewahren von Lebensmitteln und insbesondere von Getränken weit verbreitet. Im Prozess der Dosenherstellung werden diese nach dem Tiefziehen des Dosenblechs zum Dosenzylinder üblicherweise entfettet, gewaschen und üblicherweise korrosionsschützend vorbehandelt, wozu beispielsweise saure oder alkalische Reiniger und Passivierungslösungen kommerziell erhältlich sind. Zumindest die Reinigerlösungen müssen ein ausreichendes Lösevermögen für die betreffenden Metalle aufweisen, um Metallabrieb aus den Dosen wirkungsvoll zu entfernen. Durch den reinigenden Beizangriff wird die Dosenoberfläche üblicherweise bereits soweit aufgeraut, dass auch bei nachfolgender korrosionsschützender Vorbehandlung mittels Passivierungslösungen eine gewisse Oberflächenrauigkeit bestehen bleibt. Diese Rauigkeit der äußeren Mantelfläche der zylindrischen Dosen bedingt, dass die Reibung zwischen sich berührenden Dosen und zwischen Dosen und Vorrichtungen zur Aufnahme und weiteren Umformung der Dosenzylinder erhöht wird. Diese Reibung verursacht bei der Übergabe der Dosen von einem zum nächsten Fertigungsschritt regelmäßig Einbußen an Transport- und Prozessgeschwindigkeit, beispielsweise durch Ausfallzeiten besonders an Stellen, wo sich durch Vereinzelung der Dosen ein Dosenrückstau bildet, oder durch Verlangsamung der Aufnahme- und Umformprozesse von Dosenzylindern in den nachfolgenden Prozessschritten bis zur Fertigstellung der Getränkedose. Da sich hierdurch die Kapazität der Produktionsanlage verringert, ist man bestrebt, die Dosenoberflächen so zu konditionieren, dass die Reibung zwischen sich berührenden Dosen möglichst gering wird.

Zu diesem Zweck werden die Dosenzylinder mit einer reibungsvermindernden Beschichtung versehen, die üblicherweise in einer der korrosionsschützenden Vorbehandlung nachfolgenden konditionierenden Spüle aufgebracht wird. In diesem Spülschritt wird der Dosenzylinder mit einer zumeist wässrigen Lösung spezieller Tenside und/oder organischer Substanzen benetzt, die die Gleiteigenschaften der Metalloberfläche erhöhen. Derartige Substanzen werden im Stand der Technik der Dosenherstellung als "Mobility Enhancer" bezeichnet. Die Vorbehandlung der zum Dosenzylinder tiefgezogenen Dosenbleche umfasst daher üblicherweise mehrere nasschemische Behandlungsschritte, so dass neben der Entfettung bzw. Reinigung und der korrosionsschützenden Vorbehandlung auch eine Oberflächenkonditionierung der äußeren Mantelfläche der Dosenzylinder mittels einer Spüle enthaltend "Mobility Enhancer" durchgeführt wird.

Das Aufbringen einer reibungsvermindernden Schicht darf jedoch nicht dazu führen, dass die Haftung von zum Korrosionsschutz und/oder aus dekorativen Gründen aufgebrachten Lackierungen, Beschriftungen oder sonstigen Beschichtungen leidet. Insbesondere beim Einziehen ("Necking") und dem anschließenden Ausformen des Zylinderrands zum Bördel darf es zu keiner Beschädigung der Lackierung aufgrund mangelnder Lackhaftung kommen. Gerade bei diesem Umformprozess werden jedoch häufig Lackabplatzungen beobachtet, so dass derart beschädigte Dosenzylinder aussortiert werden müssen.

Die US 4,859,351 beschreibt eine solche Oberflächenkonditionierung von metallischen Dosen zur Reduktion des Reibungswiderstandes enthaltend wasserlösliche organische ethoxylierte Phosphatester, Alkohole und/oder Fettsäuren, die sich durch ihre Kompatibilität mit einer nachfolgenden Lackierung auszeichnen.

Aus der US 6,040,280 geht ebenfalls eine Oberflächenkonditionierung auf Basis ethoxylierter Fettsäurester und Polyoxyalkylenether für Aluminiumdosen hervor, die sich nicht nachteilig auf die nachfolgende Lackierung auswirkt und unmittelbar einer chromhaltigen Konversionbehandlung nachfolgt.

Weiterhin muss bei der Oberflächenbehandlung und Beschichtung der Dosenzylinder gewährleistet werden, dass die je nach Füllgut der Dosen unterschiedlichen Anforderungen hinsichtlich Korrosionsbeständigkeit erfüllt werden. Dabei sollen nur solche Wirkstoffe zum Einsatz kommen, die allgemein ökologisch und insbesondere lebensmitteltechnisch unbedenklich sind. Dies betrifft die Auswahl der Aktivkomponenten in der Oberflächenbehandlung gleichermaßen wie die Auswahl des Bindemittels bei der Außen- und Innenlackierung der Dosenzylinder und dies unabhängig davon, ob technisch nur die Behandlung der äußeren Dosenflächen vorgesehen ist, da aus produktionstechnischen Gründen häufig im Sprühverfahren gearbeitet wird, bei dem ein gewisser Materialumgriff in das Innere des Dosenzylinders nicht vermieden werden kann.

Im Stand der Technik sind verschiedene chromfreie Verfahren zur korrosionsschützenden Vorbehandlung von metallischen Dosen bekannt, die häufig anorganische Säuren, insbesondere Phosphorsäure, Flusssäure oder sonstige Quellen für Fluorid und/oder komplexe Fluoride einsetzen und die mit oder ohne zusätzlicher Verwendung organischer Polymere arbeiten.

Beispielsweise beschreibt die US-A-4,992,116 eine wässrige saure Behandlungslösung, die Phosphat, eine Fluorosäure von Zr, Ti, Hf oder Si sowie eine Polyphenolverbindung enthält, die ein Mannich-Addukt eines substituierten Amins an ein Polyalkylenphenol oder ein Tannin darstellt.

Die EP-B-8942 offenbart Behandlungslösungen, vorzugsweise für Aluminiumdosen, enthaltend a) 0,5 bis 10 g/l Polyacrylsäure oder eines Esters hiervon und b) 0,2 bis 8 g/l mindestens einer der Verbindungen Hexafluorozirkonsäure, Hexafluorotitansäure oder Hexafluorokieselsäure.

Die WO 2007113141 A1 offenbart ein Herstellungsverfahren für Aluminiumdosen, bei dem ein Metallblech aus Aluminium zu einem Dosenzylinder umgeformt wird, die Oberfläche des Dosenzylinders mit einer sauren wässrigen Zusammensetzung vorbehandelt und /oder lackiert wird und der vorbehandelte und /oder lackierte Dosenzylinder weiter umgeformt wird. Die Aluminiumdosen werden mit einer wässrigen Zusammensetzung in Kontakt gebracht, welche zumindest eine wasserlösliche Verbindung der Verbindungen der Elemente Zr, Ti oder Hf in Kombination mit HF, Mono-, Bi- und Komplexfluoride, Phosphate (Phosphat-lonen), kondensierten Phosphate, Phosphonsäuren, Phosphonate sowie wahlweise zumindest eine Verbindung ausgewählt aus N-Verbindungen oder organische Polymere, Copolymere, Blockcopolymere, Tannine, Gerbsäure, Tanninkomplexe oder Phenol-Verbindungen enthält.

Die Aufgabe der vorliegenden Erfindung besteht nun darin, ein Verfahren zur Herstellung von Metalldosen zur Verfügung zu stellen, das ein verbessertes Leistungsspektrum hinsichtlich der zuvor genannten unterschiedlichen Anforderungen aufweist. Insbesondere soll das Gleit- und Umformverhalten der zum Dosenzylinder tiefgezogenen Dosenbleche weiter verbessert werden und gleichzeitig ein hervorragender korrosionsschützender Haftgrund für eine Schutzlackierung bereitgestellt werden.

Diese Aufgabe wird gelöst durch ein mehrstufiges Herstellungsverfahren für Dosenzylinder, bei dem
(A) eine Ronde eines Aluminiumblechs zu einem einseitig offenen Dosenzylinder tiefgezogen wird;
(B) zumindest die äußere Mantelfläche des einseitig offenen Dosenzylinders vorbehandelt und lackiert wird, indem zumindest die äußere Mantelfläche des Dosenzylinders
   (i) mit einer sauren wässrigen Zusammensetzung enthaltend
      a) zumindest eine wasserlösliche anorganische Verbindungen der Elemente Zr, Ti, Si, Hf und/oder Ce, und
      b) zumindest ein wasserlösliches organisches Polymer, das zumindest Hydroxyl-Gruppen aufweist, wobei die Summe aus Säurezahl und/oder Hydroxylzahl zumindest 50 mg KOH/g beträgt,
         und anschließend - mit oder ohne dazwischenliegendem Spülschritt -
   (ii) mit einer wässrigen Dispersion eines Wachses in Kontakt gebracht wird, und
   (iii) mit oder ohne einem dem Schritt (ii) unmittelbar nachfolgenden Spülschritt mit einem Schutzlack versehen wird, dessen Bindemittel aus Acrylat- und/oder Polyesterharzen ausgewählt ist; und
(C) der vorbehandelte und lackierte Dosenzylinder zur Verjüngung des Durchmessers des Dosenzylinders im einseitig offenen Randbereich eingezogen und/oder im einseitig offenen Randbereich zum Bördel ausgeformt wird.

Eine anorganische Verbindung ist wasserlöslich im Sinne der vorliegenden Erfindung, wenn bei einer Temperatur von 20 °C 50 g der anorganischen Verbindung in einem Kilogramm Wasser mit einem pH-Wert von 3 gelöst werden können, ohne dass sich ein unlöslicher Bodenkörper in der wässrigen Phase ausbildet.

Ein organisches Polymer ist wasserlöslich im Sinne der vorliegenden Erfindung, wenn bei einer Temperatur von 20 °C 10 g des Polymers in einem Kilogramm Wasser mit einem pH-Wert von 3 gelöst werden können und weiterhin eine klare Lösung vorliegt. Eine klare Lösung liegt vor, wenn der Trübungswert (NTU) gemessen nach DIN ISO 7027 bei einer Wellenlänge von 860 nm im Streulichtverfahren bei einer Temperatur der Lösung von 20 °C unterhalb eines Werts von 50 liegt.

Die Säurezahl ist erfindungsgemäß eine experimentell zu bestimmende Messgröße, die ein Maß für die Anzahl der freien Säuregruppen im Polymer oder in einer Polymerenmischung ist. Die Säurezahl wird bestimmt, indem eine eingewogene Menge des Polymers oder der Polymerenmischung in einem Lösemittelgemisch aus Methanol und destilliertem Wasser im Volumenverhältnis 3 : 1 gelöst und anschließend mit 0,05 mol/l KOH in Methanol potentiometrisch titriert wird. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Säurezahl entspricht dabei der hinzugesetzten Menge an KOH pro Gramm Polymer bzw. Polymerenmischung im Wendepunkt der potentiometrischen Titrationskurve.

Analog gilt erfindungsgemäß, dass die Hydroxylzahl als Maß für die Anzahl an freien Hydroxylgruppen im Polymer oder in einer Polymerenmischung experimentell durch potentiometrische Titration bestimmt werden kann. Hierfür wird eine eingewogene Menge des Polymers oder der Polymerenmischung in einer Reaktionslösung von 0,1 mol/l Phtalsäureanhydrid in Pyridin bei 130 °C für 45 Minuten erwärmt und zunächst mit dem 1,5 fachen Volumen der Reaktionslösung an Pyridin und anschließend mit dem 1,5 fachen Volumen der Reaktionslösung an entionisiertem Wasser (κ < 1 µScm⁻¹) versetzt. Die freigesetzte Menge an Phtalsäure wird in diesem Gemisch mittels 1 M Natronlauge titriert. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Hydroxylzahl entspricht dabei der hinzugesetzten Menge an NaOH pro Gramm Polymer bzw. Polymerenmischung im Wendepunkt der potentiometrischen Titrationskurve.

Ein Spülschritt im Sinne der vorliegenden Erfindung dient, sofern nichts anderes bestimmt ist, ausschließlich der Entfernung eines auf der Dosenoberfläche anhaftenden Nassfilms enthaltend die Aktivkomponenten aus einem vorherigen nasschemischen Behandlungsschritt. Ein Spülschritt wird daher vorzugsweise mit Wasser durchgeführt, wobei das Spülwasser vorzugsweise einen Trocknungsrückstand von weniger als 1 g/l, besonders bevorzugt von weniger als 100 ppm, insbesondere bevorzugt von weniger als 10 ppm aufweist.

Unter einem Wachs werden im Sinne der vorliegenden Erfindung organische Stoffe bezeichnet, die bei 20 °C knetbar, fest bis brüchig hart sind, eine grobe bis feinkristalline Struktur aufweisen, farblich durchscheinend bis opak, aber nicht glasartig sind, über 40 °C ohne Zersetzung schmelzen, wenig oberhalb des Schmelzpunktes leicht flüssig (wenig viskos) sind, eine stark temperaturabhängige Konsistenz und Löslichkeit aufweisen sowie unter leichtem Druck polierbar ist. Ist mehr als eine der oben aufgeführten Eigenschaften nicht erfüllt, ist der organische Stoff kein Wachs.

Das erfindungsgemäße Verfahren bewirkt zunächst eine gute Anhaftung der Wachse, die im zweiten obligaten Schritt des Verfahrens auf der Oberfläche des Dosenzylinders aufgebracht werden. Die Haftung der Wachse ist derart, dass in dem erfindungsgemäßen Verfahren nachgelagerten Spülschritten, die vor der Aufbringung des Dosenlackes erfolgen, kein nennenswerter Abtrag der Wachsauflage beobachtet wird. Die gute Anhaftung der Wachse wiederum erhöht die Mobilität der Dosenzylinder in der industriellen Dosenfertigung, insbesondere im Auslauf einzelner Fertigungsschritte, da die Reibung sich berührender Mantelflächen der Dosenzylinder deutlich herabgesetzt wird, so dass hohe Transport- und damit auch die Produktionsgeschwindigkeiten gewährleistet werden können.

Darüber hinaus ist das Umformverhalten von erfindungsgemäß behandelten Dosenzylinder nach der Aufbringung eines Dosenlackes verbessert, wobei Lackabplatzungen beim Verjüngen des Dosendurchmesser am oberen Ende ("Necking") und nach dem Ausformen des oberen Ende zum Bördel weniger häufig und in weitaus geringerem Ausmaße auftreten.

Insbesondere vorteilhaft ist das erfindungsgemäße Verfahren daher für das Umformen im Randbereich am offenen Ende des Dosenzylinders, wobei jede solche Umformung umfasst wird, die unmittelbar notwendig für die Herstellung einer Verbindung des Dosenzylinders mit einer Verschlusskappe ist, beispielsweise das Einziehen des offenen Ende des Dosenzylinders zur Verjüngung des Durchmessers des Dosenzylinders im Randbereich ("Necking") und/oder das Ausformen des Dosenzylinders zum Bördel.

Erfindungsgemäß bevorzugt sind Verfahren, bei denen der Gehalt an wasserlöslichen anorganischen Verbindungen der Elemente Zr, Ti, Si, Hf und/oder Ce gemäß Komponente a) in der sauren wässrigen Zusammensetzung im Schritt (i) im Bereich von 0,01-1 g/l bezogen auf die Gesamtheit der vorgenannten Elemente liegt, wobei der Anteil an wasserlöslichen anorganischen Verbindungen der Elemente Zr und/oder Ti vorzugsweise zumindest 0,01 g/l, besonders bevorzugt zumindest 0,02 g/l bezogen auf die Gesamtheit der Elemente Zr und Ti beträgt.

Weiterhin ist in diesem Zusammenhang bevorzugt, dass die wasserlöslichen Verbindungen gemäß Komponente a) der sauren wässrigen Zusammensetzung im Schritt (i) des erfindungsgemäßen Verfahrens ausgewählt sind aus Fluorokomplexen der Elemente Zr, Ti und/oder Si, besonders bevorzugt aus Fluorokomplexen der Elemente Zr und/oder Ti.

Als Fluorokomplexe im Sinne der vorliegenden Erfindung werden Komplexe mit dem entsprechenden zuvor genannten metallischen oder halbmetallischen Elementen verstanden, die zumindest ein Fluoratom als Liganden aufweisen und in wässriger Lösung als Anionen vorliegen.

Der Anteil der im erfindungsgemäßen Verfahren im Schritt (i) einzusetzenden organischen Harze gemäß Komponente b) liegt in der sauren wässrigen Zusammensetzung vorzugsweise im Bereich von 0,1-50 g/l, besonders bevorzugt im Bereich von 0,5-10 g/l.

Der im erfindungsgemäßen Verfahren zu verwendende wasserlösliche organische Harz gemäß Komponente b) der sauren wässrigen Zusammensetzung im Schritt (i) ist vorzugsweise ausgewählt aus Polymeren oder Copolymeren auf Basis von Vinylethern, Vinylakoholen, (Meth)acrylsäure, Maleinsäure oder Fumarsäure, aus Hydroxylgruppen enthaltenden Polyestern sowie aus Kondensationsprodukten von Glycoluril oder Melamin mit Aldehyden, besonders bevorzugt sind organische Harze die Kondensationsprodukte von Glycoluril oder Melamin mit Aldehyden darstellen, insbesondere Kondensationsprodukte von Glycoluril mit Aldehyden mit einer Hydroxylzahl von vorzugsweise zumindest 50 mg KOH/g. Der Alkylierungsgrad der Kondensationsprodukte von Glycoluril oder Melamin mit Aldehyden liegt dabei vorzugsweise unterhalb von 20 %, besonders bevorzugt unterhalb von 10 %. Für die zuvorgenannten Kondensationsprodukte gilt, dass primäre Aldehyde bevorzugt sind, insbesondere Acetaldehyd und Formaldehyd.

Weiterhin ist es bevorzugt, dass die saure wässrige Zusammensetzung im Schritt (i) des erfindungsgemäßen Verfahrens zusätzlich Phosphat-Ionen, vorzugsweise in einer Menge von zumindest 0,1 g/l enthält. Die Verwendung von Phosphaten verbessert die Korrosionsschutzeigenschaften der im Schritt (i) gebildeten Konversionsschicht. Der Anteil an Phosphat-Ionen überschreitet aus Gründen der Wirtschaftlichkeit des Verfahrens und zur Vermeidung von Phosphatschlämmen vorzugsweise nicht 10 g/l.

Der pH-Wert der sauren wässrigen Zusammensetzung im Schritt (i) ist im erfindungsgemäßen Verfahren vorzugsweise nicht kleiner als 2, besonders bevorzugt nicht kleiner als 3, und vorzugsweise nicht größer als 6, besonders bevorzugt nicht größer als 5.

Im erfindungsgemäßen Verfahren wird der einseitig offene Dosenzylinder im Schritt (ii) mit einer wässrigen Dispersion eines Wachses in Kontakt gebracht, um hinreichende Gleiteigenschaften der äußeren Mantelflächen des Dosenzylinders bei Kontakt mit anderen Dosen oder mit Aufnahmewerkzeugen in der Dosenherstellung zu gewährleisten. Der hierfür eingesetzte Wachs ist vorzugsweise ausgewählt aus synthetischen Wachsen, besonders bevorzugt aus oxidierten Polyalkylenwachsen, insbesondere bevorzugt aus oxidierten Polyethylenwachsen, wobei der Gehalt an Wachsen in der wässrigen Dispersion im Schritt (ii) vorzugsweise zumindest 0,1 g/l, besonders bevorzugt zumindest 1 g/l beträgt, um sicherzustellen, dass eine hinreichende Menge des Wachses auf die gemäß Schritt (i) vorbehandelten Flächen des Dosenzylinders aufziehen kann. Aus Gründen der Wirtschaftlichkeit des erfindungsgemäßen Verfahrens ist der Anteil an Wachsen in der wässrigen Dispersion im Schritt (ii) vorzugsweise nicht größer als 50 g/l, besonders bevorzugt nicht größer als 10 g/l.

Nach dem Schritt (ii) des erfindungsgemäßen Verfahrens folgen üblicherweise weitere nasschemische Behandlungsschritte, die letztendlich die Beschichtung des Dosenzylinders mit einem Dosenlack umfassen. Bei der Aufbringung des Dosenlackes wird bei der Dosenfertigung zwischen Innen- und Außenlacken unterschieden. Das erfindungsgemäße Verfahren stellt dabei eine geeignete lackhaftungsvermittelnde und korrosionsschützende Vorbehandlung für die Aufbringung sowohl von Außen- als Innenlacken dar.

Im erfindungsgemäßen Verfahren wird daher zumindest die äußere Mantelfläche des einseitig offenen Dosenzylinders nach dem In-Kontakt-bringen mit der wässrigen Zusammensetzung im Schritt (ii) und ggf. nach einem dem Schritt (ii) unmittelbar nachfolgenden Spülschritt mit einem Schutzlack versehen.

Da Doseninnenlacke häufig in Kontakt mit Lebensmitteln stehen, werden an die Beschichtung der Doseninnenflächen besondere Anforderungen gestellt. Im Stand der Technik findet beispielsweise eine Abkehr von der Verwendung von Bisphenol A basierten Epoxidharzen als Doseninnenlack statt. So laufen verschiedene nationale Gesetzgebungsinitiativen, unter anderem veranlasst durch die EU-Direktive 2002/72/EU, zur Festlegung von Höchstgrenzen für die Migration von Bisphenol A aus Umverpackungen in Lebensmittel.

Da bei der Lackauftragung auf den Dosenaußenflächen ein Umgriff des meist aufgesprühten Lackes in das Doseninnere verfahrenstechnisch nicht vollständig vermieden werden kann, werden auch für die Lackierung im Außenbereich der Dose lebensmittelgeeignete Lacke bevorzugt eingesetzt.

Es hat sich nun herausgestellt, dass das erfindungsgemäße Verfahren auch für solche Schutzlacke geeignet ist, deren Bindemittel auf Acrylatharzen und Polyesterharzen basieren.

Im erfindungsgemäßen Verfahren zur Herstellung tiefgezogener Dosenzylinder wird daher zumindest die äußere Mantelfläche des einseitig offenen Dosenzylinders mit solchen Schutzlacken versehen, deren Bindemittel ausgewählt sind aus Acrylatharzen und/oder Polyesterharzen, wobei die Acrylatharze vorzugsweise aus Copolymeren von Alkenen, insbesondere Ethen, Propen, 1 Buten, 2 Buten, Isobuten, 1,3-Butadien und/oder 2-Methylbuta-1,3-dien, und α,β-ungesättigten Carbonsäuren, insbesondere Zimtsäure, Crotonsäure, Fumarsäure, Itaconsäure, Maleinsäure, Acrylsäure und/oder Methacrylsäure, bestehen.

Das In-Kontakt-Bringen der jeweiligen wässrigen Zusammensetzungen in den Schritten (i) und (ii) sowie die Aufbringung des Schutzlackes erfolgt in erfindungsgemäßen Verfahren vorzugsweise durch Aufsprühen, beispielsweise im Airless-Verfahren.

Beim sogenannten Airless-Verfahren werden die jeweiligen Flüssigkeiten luftlos zerstäubt und so auf die Materialoberfläche aufgetragen. Bei diesen Sprühverfahren wird eine vorgegebene Menge der Flüssigkeit, während die Dose zur Ausbildung eines homogenen Nassfilms um ihre eigene Längsachse rotiert, mittels Sprühpistolen aufgebracht.

Nach dem Aufbringen des Nassfilms zur Beschichtung mit einem Schutzlackes werden die derart behandelten einseitig offenen Dosenzylinder vorzugsweise bei Temperaturen im Bereich von 120 °C bis 200 °C (Objekttemperatur) zu einem Lackfilm ausgehärtet.

Die in einem derartigen erfindungsgemäßen Verfahren nasschemisch vorbehandelten und mit einem Schutzlack versehenen, einseitig offenen Dosenzylinder werden im weiteren Verlauf der Dosenherstellung üblicherweise im einseitig offenen Randbereich umgeformt, dabei insbesondere zur Verjüngung des Durchmessers des Dosenzylinders im Randbereich eingezogen ("Necking") und zum Bördel ausgeformt.

Das aufgrund des erfindungsgemäßen Verfahrens neben dem Korrosionsschutz, der Lackhaftung und dem niedrigen Gleitwert vermittelte verbesserte Umformverhalten der Dosenzylinder wird demnach nur dann technisch genutzt, wenn der zuvor genannte Umformprozess sich der nasschemischen Vorbehandlung gemäß der Verfahrensschritte (i), (ii) und (iii) anschließt.

Das erfindungsgemäße Verfahren zur Herstellung tiefgezogener Dosenzylinder ist daher dadurch gekennzeichnet, dass die Verfahrensschritte (i) und (ii) sowie ein nachfolgender Schritt zur Aufbringung eines Schutzlackes (iii) nur auf solchen einseitig offenen Dosenzylindern erfolgen, die im einseitig offenen Randbereich nicht umgeformt sind, dort weder zur Verjüngung des Durchmessers des Dosenzylinders eingezogen noch zum Bördel ausgeformt sind.

Die im erfindungsgemäßen Verfahren eingesetzten einseitig offenen Dosenzylinder sind aus Aluminiumblech tiefgezogen.

Weiterhin umfasst die vorliegende Erfindung eine besonders geeignete saure wässrige Zusammensetzung zur nasschemischen Vorbehandlung gemäß Verfahrensschritt (i) des erfindungsgemäßen Verfahrens zur Herstellung von einseitig offenen Dosenzylindern.

Eine solche erfindungsgemäße saure wässrige Zusammensetzung zur Oberflächenbehandlung metallischer Dosen besitzt einen pH-Wert im Bereich von 2 bis 5 und enthält
a) 0,005-0,5 Gew.-%, vorzugsweise 0,01-0,1 Gew.-%, an Fluorokomplexen der Elemente Zr, Ti und/oder Si bezogen auf die jeweiligen Elemente,
b) 0,1-3 Gew.-%, an wasserlöslichen Harzen ausgewählt aus Kondensationsprodukten von Glycoluril mit Aldehyden, wobei das Kondensationsprodukt vorzugsweise eine Hydroxylzahl von zumindest 50 mg KOH/g aufweist und der Alkylierungsgrad des Kondensationsproduktes vorzugsweise kleiner als 20 % ist.

Für das Kondensationsprodukt sind primäre Aldehyde bevorzugt, insbesondere Acetaldehyd und Formaldehyd.

Die erfindungsgemäße saure wässrige Zusammensetzung enthält vorzugsweise weniger als 0,1 Gew.-% an organischen Polymeren aus der Gruppe der Epoxide, Urethane und Polyester, vorzugsweise weniger als 0,1 Gew.-% an solchen organischen Polymeren, die keine Kondensationsprodukte von Glycoluril mit Aldehyden darstellen.

Nach dem Tiefziehen der Ronde zum einseitig offenen Dosenzylinder erfolgt vorzugsweise ein Reinigungsschritt zur Entfernung von Metallbearbeitungsflüssigkeiten.

### Ausführungsbeispiele:

Als Basisrezeptur für die Vorbehandlung von Aluminiumdosen (EN AW-3104) wurde eine saure wässrige Behandlungslösung mit folgender Zusammensetzung verwendet:
50 ppm Zr aus H₂ZrF₆
40 ppm B aus Borsäure
80 ppm PO₄ aus Phosphorsäure
300 ppm NO₃ aus Salpetersäure
25 ppm freies Fluorid (gemessen mit ionenselektiver Elektrode)
pH-Wert 3,2

In einem ersten Schritt findet eine Konversionsbehandlung der äußeren Flächen der Dosen mit zuvor genannnter Behandlungslösung statt, die zusätzlich ein organisches Polymer enthält. Folgende organische Polymere wurden in einer solchen Konversionsbehandlung verwendet:
Org1: Tetramethylolglycoluril-Harz (Hydroxylzahl 450-480 mg KOH/g)
Org2: Maleinsäure-Methylvinylether-Copolymer (Säurezahl 220-280mg KOH/g)
Org3: Polyacrylsäure

Die äußeren Flächen der Aluminiumdosen wurden also zunächst mit den in der Tabelle 1 aufgeführten Behandlungslösungen besprüht, anschließend mit entionisiertem Wasser (κ<1µScm⁻¹) gespült und danach in einem zweiten Schritt mit einer wässrigen Lösung enthaltend 7 g/l eines emulgierten, nicht-ionogenen oxidierten Polyethylenwachs besprüht unmittelbar danach wiederum mit entionisiertem Wasser (κ<1µScm⁻¹) gespült und anschließend bei 60 °C Objekttemperatur getrocknet.

| Tab.1 | | | | |
|---|---|---|---|---|
| Formulierungen zur Oberflächenbehandlung von Aluminiumdosen | | | | |
| Beispiel-Nr. | Polymer in g/l | | | Schichtauflage¹ an Zr mg/m² |
| | Org1 | Org2 | Org3 | |
| V1 | - | - | - | 19 |
| E1 | 6 | - | - | 20 |
| E2 | - | 6 | - | 22 |
| E3 | - | - | 6 | 19 |
| ¹ gemessen mit Röntgenfluoreszenzanalyse (RFA) | | | | |

Die Eigenschaften der äußeren Dosenflächen, die entsprechend dem zuvor beschriebenen zweistufigen Verfahren vorbehandelt wurden, sind in Tabelle 2 hinsichtlich Gleitverhalten und Lackhaftung bestimmt worden.

Das Gleitverhalten wurde bestimmt, indem drei Dosen in Form eines Dreiecks gestapelt wurden, wobei die unteren beiden Dosen, die die Basis bilden, an einem Ende vertikal zur Längsrichtung der Dose angehoben werden. Beim einseitigen Anheben des Dosenstapels wird der Winkel zwischen Dosenachse und der Horizontalen als "Slip Angle" angegeben, bei dem die obere Dose beginnt abzugleiten. Dieser Test wurde fünfmal mit verschiedenen aber gleichartig vorbehandelten Dosen wiederholt und der Mittelwert der jeweils bestimmten "Slip Angle" gebildet.

Die Lackhaftung wurde nach erfolgter Außenlackierung der vorbehandelten Dosen mit einem handelsüblichen Dosenlack (Lackbasis: Acrylat-modifizierter Polyester, Fa. DSM, Uradil ® SZ250; Schichtdicke ca. 15 µm) und nach der Verjüngung bzw. Stauchung des offenen Dosenrands ("Necking") und 90° Bördelung des Dosenrands bestimmt. Die Bewertung erfolgte visuell im Umformbereich der Dose nach für jeweils fünf Dosen nach folgenden Kriterien:
1: keine sichtbaren Risse oder Lackabplatzungen
2: Risse und leichte Lackabplatzungen
3: starke Lackabplatzungen

| Tab. 2 | | |
|---|---|---|
| Gleitverhalten und Lackhaftung der gemäß Tabelle 1 vorbehandelten äußeren Dosenflächen | | |
| Beispiel-Nr. | Slip Angle | Lackhaftung |
| V1 | 33 | 3 |
| E1 | 22 | 1 |
| E2 | 25 | 1-2 |
| E3 | 26 | 1-2 |

Die Ergebnisse zeigen, dass im erfindungsgemäßen zweistufigen Verfahren zur Oberflächenbehandlung, insbesondere mit Zusammensetzungen die im ersten Schritt das Glycoluril-Harz enthalten (E1), die niedrigsten Slip Angle und die beste Lackhaftung erzielt werden (E1-E3).

## Patentansprüche

1. Herstellverfahren für Dosenzylinder, bei dem
(A) eine Ronde eines Aluminiumblechs zu einem einseitig offenen Dosenzylinder tiefgezogen wird;
(B) zumindest die äußere Mantelfläche des einseitig offenen Dosenzylinders vorbehandelt und lackiert wird, indem zumindest die äußere Mantelfläche des einseitig offenen Dosenzylinders
(i) mit einer sauren wässrigen Zusammensetzung enthaltend
a) zumindest eine wasserlösliche anorganische Verbindungen der Elemente Zr, Ti, Si, Hf und/oder Ce, und
b) zumindest ein wasserlösliches organisches Harz, das zumindest Hydroxyl-Gruppen aufweist, wobei die Summe aus Säurezahl und/oder Hydroxylzahl der jeweiligen organischen Harze zumindest 50 mg KOH/g beträgt,
und anschließend - mit oder ohne dazwischenliegendem Spülschritt -
(ii) mit einer wässrigen Dispersion eines Wachses in Kontakt gebracht wird, und
(iii) mit oder ohne einem dem Schritt (ii) unmittelbar nachfolgenden Spülschritt mit einem Schutzlack versehen wird, dessen Bindemittel ausgewählt ist aus Acrylat- und/oder Polyesterharzen; und
(C) der vorbehandelte und lackierte Dosenzylinder zur Verjüngung des Durchmessers des Dosenzylinders im einseitig offenen Randbereich eingezogen und/oder im einseitig offenen Randbereich zum Bördel ausgeformt wird.

2. Verfahren nach Anspruch 1, **dadurch gekennzeichnet, dass** die wasserlöslichen Verbindungen gemäß Komponente a) der sauren wässrigen Zusammensetzung im Schritt (i) ausgewählt sind aus Fluorokomplexen der Elemente Zr, Ti und/oder Si.

3. Verfahren nach einem oder beiden der vorherigen Ansprüche, **dadurch gekennzeichnet, dass** der Gehalt an wasserlöslichen anorganischen Verbindungen der Elemente Zr, Ti, Si, Hf und/oder Ce gemäß Komponente a) in der sauren wässrigen Zusammensetzung im Schritt (i) im Bereich von 0,01-1 g/l bezogen auf die Gesamtheit der vorgenannten Elemente liegt, wobei der Anteil an wasserlöslichen anorganischen Verbindungen der Elemente Zr und/oder Ti vorzugsweise zumindest 0,01 g/l, besonders bevorzugt zumindest 0,02 g/l bezogen auf die Gesamtheit der Elemente Zr und Ti beträgt.

4. Verfahren nach einem oder mehreren der vorherigen Ansprüche, **dadurch gekennzeichnet, dass** das wasserlösliche organische Harz gemäß Komponente b) der sauren wässrigen Zusammensetzung im Schritt (i) ausgewählt ist aus Polymeren oder Copolymeren auf Basis von Vinylethern, Vinylakoholen, (Meth)acrylsäure, Maleinsäure oder Fumarsäure, aus Hydroxylgruppen enthaltenden Polyestern sowie aus Kondensationsprodukten von Glycoluril oder Melamin mit Aldehyden.

5. Verfahren nach einem oder mehreren der vorherigen Ansprüche, **dadurch gekennzeichnet, dass** der Gehalt an wasserlöslichen organischen Harzen gemäß Komponente b) in der sauren wässrigen Zusammensetzung im Schritt (i) im Bereich von 0,1-50g/l, vorzugsweise im Bereich von 0,5-10 g/l liegt.

6. Verfahren nach einem oder mehreren der vorherigen Ansprüche, **dadurch gekennzeichnet, dass** die saure wässrige Zusammensetzung im Schritt (i) zusätzlich Phosphat-Ionen, vorzugsweise in einer Menge von zumindest 0,1 g/l, aber vorzugsweise nicht mehr als 10 g/l an Phosphat-Ionen enthält.

7. Verfahren nach einem oder mehreren der vorherigen Ansprüche, **dadurch gekennzeichnet, dass** die saure wässrige Zusammensetzung im Schritt (i) einen pH-Wert von nicht kleiner als 2, vorzugsweise nicht kleiner als 3, und nicht größer als 6, vorzugsweise nicht größer als 5 aufweist.

8. Verfahren nach einem oder mehreren der vorherigen Ansprüche, **dadurch gekennzeichnet, dass** der Wachs in der wässrigen Dispersion im Schritt (ii) ausgewählt ist aus synthetischen Wachsen, vorzugsweise aus oxidierten Polyalkylenwachsen, besonders bevorzugt aus oxidierten Polyethylenwachsen, wobei der Gehalt an Wachsen in der wässrigen Dispersion vorzugsweise im Bereich von 0,1-50 g/l, besonders bevorzugt im Bereich von 1-10 g/l liegt.

9. Verfahren gemäß einem oder mehreren der vorherigen Ansprüche, **dadurch gekennzeichnet, dass** das In-Kontakt-bringen mit den jeweiligen wässrigen Zusammensetzungen in den Verfahrensschritten (i) und (ii) sowie die Aufbringung des Schutzlackes jeweils durch Aufsprühen erfolgt.

10. Saure wässrige Zusammensetzung mit einem pH-Wert im Bereich von 2 bis 5 zur Oberflächenbehandlung metallischer Dosen enthaltend
a) 0,005-0,5 Gew.-% an Fluorokomplexen der Elemente Zr, Ti und/oder Si bezogen auf die jeweiligen Elemente,
b) 0,1-3 Gew.-% an wasserlöslichen Harzen ausgewählt aus Kondensationsprodukten von Glycoluril mit Aldehyden.

11. Zusammensetzung gemäß Anspruch 10, **dadurch gekennzeichnet, dass** das Kondensationsprodukt von Glycoluril mit Aldehyden eine Hydroxylzahl von zumindest 50 mg KOH/g aufweist, wobei der Alkylierungsgrad vorzugsweise kleiner als 20 % ist.

## Claims

1. A production method for can cylinders, in which
(A) a circular blank of an aluminum sheet is deep-drawn to form a can cylinder that is open at one end;
(B) at least the outer lateral surface of the can cylinder that is open at one end is pretreated and coated, by at least the outer lateral surface of the can cylinder that is open at one end being brought into contact
(i) with an acidic aqueous composition containing
a) at least one water-soluble inorganic compound of the elements Zr, Ti, Si, Hf and/or Ce, and
b) at least one water-soluble organic resin, which comprises at least hydroxyl groups, where the sum of the acid number and/or hydroxyl number of the respective organic resins is at least 50 mg KOH/g, and subsequently, with or without an intermediate rinsing step, is brought into contact
(ii) with an aqueous dispersion of a wax, and
(iii) is provided, with or without a rinsing step immediately following step (ii), with a protective coating, the binder of which is selected from acrylate and/or polyester resins; and
(C) in order to taper the diameter of the can cylinder in the edge region that is open at one end, the pretreated and coated can cylinder is drawn in and/or is shaped into a flange in the edge region that is open at one end.

2. The method according to claim 1, **characterized in that** the water-soluble compounds according to component a) of the acidic aqueous composition in step (i) are selected from fluoro complexes of the elements Zr, Ti and/or Si.

3. The method according to one or both of the preceding claims, **characterized in that** the content of water-soluble inorganic compounds of the elements Zr, Ti, Si, Hf and/or Ce according to component a) in the acidic aqueous composition in step (i) is in the range of 0.01-1 g/l, with respect to the total of the above-mentioned elements, the proportion of water-soluble inorganic compounds of the elements Zr and/or Ti preferably being at least 0.01 g/l, particularly preferably at least 0.02 g/l, with respect to the total of the elements Zr and Ti.

4. The method according to one or more of the preceding claims, **characterized in that** the water-soluble organic resin according to component b) of the acidic aqueous composition in step (i) is selected from polymers or copolymers based on vinyl ethers, vinyl alcohols, (meth)acrylic acid, maleic acid or fumaric acid, from hydroxyl group-containing polyesters and from condensates of glycoluril or melamine with aldehydes.

5. The method according to one or more of the preceding claims, **characterized in that** the content of water-soluble organic resins according to component b) in the acidic aqueous composition in step (i) is in the range of 0.1-50 g/l, preferably in the range of 0.5-10 g/l.

6. The method according to one or more of the preceding claims, **characterized in that** the acidic aqueous composition in step (i) also contains phosphate ions, preferably in an amount of at least 0.1 g/l, but preferably no more than 10 g/l of phosphate ions.

7. The method according to one or more of the preceding claims, **characterized in that** the acidic aqueous composition in step (i) has a pH of no less than 2, preferably no less than 3, and no greater than 6, preferably no greater than 5.

8. The method according to one or more of the preceding claims, **characterized in that** the wax in the aqueous dispersion in step (ii) is selected from synthetic waxes, preferably from oxidized polyalkylene waxes, particularly preferably from oxidized polyethylene waxes, the content of waxes in the aqueous dispersion preferably being in the range of 0.1-50 g/l, particularly preferably in the range of 1-10 g/l.

9. The method according to one or more of the preceding claims, **characterized in that** the aqueous compositions are brought into contact in method steps (i) and (ii) by spraying and the protective coating is applied by spraying.

10. An acidic aqueous composition having a pH in the range of 2 to 5 for treating the surface of metal cans, containing
a) 0.005-0.5 wt.% of fluoro complexes of the elements Zr, Ti and/or Si, with respect to the respective elements,
b) 0.1-3 wt.% of water-soluble resins selected from condensates of glycoluril with aldehydes.

11. The composition according to claim 10, **characterized in that** the condensate of glycoluril with aldehydes has a hydroxyl number of at least 50 mg KOH/g, the degree of alkylation preferably being less than 20%.

## Revendications

1. Procédé de fabrication de cylindres de boîtes, dans lequel
(A) un cercle de feuille d'aluminium est emboutie dans un cylindre de boîte ouvert sur un côté ;
(B) au moins la surface externe du cylindre de boîte ouvert sur un côté est prétraitée et peinte, en ce qu'au moins la surface externe du cylindre de boîte ouvert sur un côté
(i) est mise en contact avec une composition aqueuse acide contenant
(a) au moins un composé inorganique hydrosoluble des éléments Zr, Ti, Si, Hf et/ou Ce, et
(b) au moins une résine organique hydrosoluble présentant au moins des groupes hydroxyle, la somme de l'indice d'acide et/ou de l'indice d'hydroxyle des résines organiques respectives étant d'au moins 50 mg de KOH/g, puis - avec ou sans étape de rinçage intermédiaire
(ii) avec une dispersion aqueuse d'une cire, et
(iii) avec ou sans étape de rinçage immédiatement après l'étape (ii), est enduite d'un vernis protecteur dont le liant est choisi parmi les résines d'acrylate et/ou de polyester ; et
(C) le cylindre de boîte prétraité et peint est rétracté pour affiner le diamètre du cylindre de boîte au niveau de la périphérie ouverte sur un côté et/ou replié vers la bordure au niveau de la périphérie ouverte sur un côté.

2. Procédé selon la revendication 1, **caractérisé en ce que** les composés hydrosolubles selon le point a) présents dans la composition aqueuse acide de l'étape (i) sont choisis parmi les complexes fluorés des éléments Zr, Ti et/ou Si.

3. Procédé selon l'une des revendications précédentes ou les deux revendications précédentes, **caractérisé en ce que** la teneur en composés inorganiques hydrosolubles des éléments Zr, Ti, Si, Hf et/ou Ce selon le point a) présents dans la composition aqueuse acide de l'étape (i) se situe dans la plage allant de 0,01 à 1 g/l, par rapport à la totalité des éléments susmentionnés, la proportion de composés inorganiques hydrosolubles des éléments Zr et/ou Ti étant de préférence d'au moins 0,01 g/l, et de manière particulièrement préférée d'au moins 0,02 g/l, par rapport à la totalité des éléments Zr et Ti.

4. Procédé selon une ou plusieurs des revendications précédentes, **caractérisé en ce que** la résine organique hydrosoluble selon le point b) présente dans la composition aqueuse acide de l'étape (i) est choisie parmi les polymères ou les copolymères à base d'éthers vinyliques, d'alcools vinyliques, d'acide (méth)acrylique, d'acide maléique ou d'acide fumarique, parmi les polyesters contenant des groupes hydroxyle et parmi les produits de condensation du glycoluril ou de la mélamine avec des aldéhydes.

5. Procédé selon une ou plusieurs des revendications précédentes, **caractérisé en ce que** la teneur en résines organiques hydrosolubles selon le point b) présentes dans la composition aqueuse acide de l'étape (i) se situe dans la plage allant de 0,1 à 50 g/l, de préférence de 0,5 à 10 g/l.

6. Procédé selon une ou plusieurs des revendications précédentes, **caractérisé en ce que** la composition aqueuse acide de l'étape (i) contient en outre des ions phosphate, de préférence en une quantité d'au moins 0,1 g/l, mais de préférence d'au plus 10 g/l d'ions phosphate.

7. Procédé selon une ou plusieurs des revendications précédentes, **caractérisé en ce que** la composition aqueuse acide de l'étape (i) présente une valeur de pH d'au moins 2, et de préférence d'au moins 3, mais d'au plus 6, et de préférence d'au plus 5.

8. Procédé selon une ou plusieurs des revendications précédentes, **caractérisé en ce que** la cire présente dans la dispersion aqueuse de l'étape (ii) est choisie parmi les cires synthétiques, de préférence parmi les cires de polyalkylène oxydées, de manière particulièrement préférée parmi les cires de polyéthylène oxydées, la teneur en cires de la dispersion aqueuse se situant de préférence dans la plage allant de 0,1 à 50 g/l, et de manière particulièrement préférée dans la plage allant de 1 à 10 g/l.

9. Procédé selon une ou plusieurs des revendications précédentes, **caractérisé en ce que** la mise en contact avec les compositions aqueuses respectives aux étapes de procédé (i) et (ii) et l'application du vernis protecteur s'effectuent, dans chaque cas, par pulvérisation.

10. Composition aqueuse acide dont la valeur de pH se situe dans la plage allant de 2 à 5, conçue pour le traitement de surface de boîtes métalliques et contenant
(a) de 0,005 à 0,5 % en poids de complexes fluorés des éléments Zr, Ti et/ou Si, dans chaque cas par rapport aux éléments correspondants,
(b) de 0,1 à 3 % en poids de résines hydrosolubles choisies parmi les produits de condensation du glycoluril avec des aldéhydes.

11. Composition selon la revendication 10, **caractérisée en ce que** le produit de condensation du glycoluril avec des aldéhydes présente un indice d'hydroxyle d'au moins 50 mg de KOH/g, le degré d'alkylation étant de préférence inférieur à 20 %.
